# EUROPÄISCHE PATENTANMELDUNG

(11) **EP 0 990 627 A1**
(43) Veröffentlichungstag der Anmeldung: **05.04.2000**
(21) Anmeldenummer: 99115604.3
(22) Anmeldetag: 06.08.1999
(51) Int. Cl.: C04B 28/02, C04B 28/16, E04F 15/18, C04B 111/34

(54) **Hydraulisches Bindemittel mit reduzierter Schwindung und seine Verwendung**

(30) Priorität: 02.10.1998 DE 19845473; 18.11.1998 DE 19853196
(71) Anmelder: Rohrbach Zement GmbH & Co. KG, 72359 Dotternhausen (DE)
(72) Erfinder: Rohrbach, Gerhard, 72359 Dotternhausen (DE); Danileijko, Jurij, 72336 Balingen (DE); Erler, Horst, 72359 Dotternhausen (DE); Gänssmantel, Jürgen, 72359 Dotternhausen (DE); Gecimli, Yildiz, 72359 Dotternhausen (DE); Geiser, Edwin, 72359 Dotternhausen (DE)
(74) Vertreter: Körber, Wolfhart, Dr.

(57) **Zusammenfassung**

Die Erfindung bezieht sich auf ein hydraulisches Bindemittel mit reduzierter Schwindung und seine Verwendung für die Herstellung von zementgebundenen Baukörpern, wobei das Bindemittel in einer Standardrezeptur zumindest enthält: gebrannten Ölschiefer, Zementklinker, Calciumsulfat, Siliciumdioxid, Alkalisulfat und Fließmittel.

## Beschreibung

Gegenstand der vorliegenden Erfindung ist ein Bindemittel, welches wegen seiner schwindarmen bzw. leicht quellenden hydraulischen Erhärtung sehr vielseitig eingesetzt und verwendet werden kann.

Als Schwinden bezeichnet man die Volumenverringerung von Zementstein bzw. zementgebundenen Massen. Das Schwinden kann z.B. leicht die Bildung von netzartigen, wie Spinnweben aussehenden Schwindrissen verursachen, die den Rissen von austrocknendem Ton oder Schlamm ähnlich und wesensgleich sind. In beiden Fällen kann das austrocknende Feststoff-Wasser-Gemisch der Volumenverringerung durch den Verlust des Wassers nicht mehr durch ein plastisches Verformen folgen und reißt. Bei hydraulisch erhärtenden Bindemitteln, wie z.B. Zement nach DIN 1164, kommt das chemische Schwinden ohne Wasserverlust dazu, das man damit erklärt, daß das dem Zement zugegebene flüssige Anmachwasser in dem Gitter der entstehenden Hydratationsprodukte weniger Platz einnimmt als vorher.

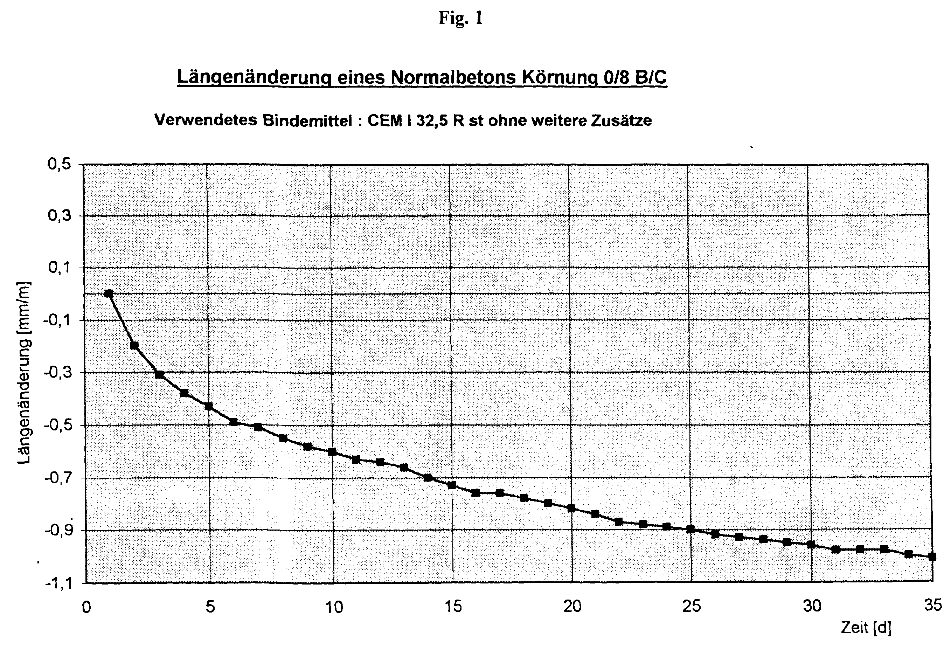

Fig. 1 zeigt die Längenänderung eines üblichen Normalbetons unter kontrollierten Bedingungen.

Entstandene Risse sind oft nicht nur optische Mängel, sondern begünstigen das Eindringen von Wasser und Schadstoffen in die Baustoffe oder Bauteile, und stellen damit direkte und indirekte Schädigungen und somit letztendlich eine enorme volkswirtschaftliche Belastung dar. Zur Reduzierung der Bildung von Schwindrissen werden schon seit vielen Jahrzehnten technologische (1), physikalische (2) und/oder chemische (3) Möglichkeiten der Beeinflussung angewendet.
1) Technologisch sorgt z.B. bei Betonen eine geeignete Nachbehandlung durch längeres Feuchthalten dafür, daß die großen freien Oberflächen vor Sonne, Wind und Zugluft, z.B. mit geeigneten Folien, Matten oder Bewässerung durch Sprühnebel geschützt und damit kaum oder gering austrocknungsgefährdet sind.
   Derartige Nachbehandlungsmaßnahmen werden z.B. auch bei Zementestrichen angewandt. Insbesondere bei der Herstellung von schwimmendem Estrich wie auch von Estrich auf Trennschicht werden durch eine weitere technologische Maßnahme, nämlich die Unterteilung größerer Estrichflächen durch Dehnungsfugen bzw. Scheinfugen in möglichst gedrungene Felder, die Bildung freier Schwindrisse kompensiert. Allerdings kommt es dabei sehr auf die handwerkliche Erfahrung der Verarbeiter an, denn sind Scheinfügen falsch eingebracht, kann es trotzdem zu der Bildung von Schwindrissen in den Estrichflächen kommen. Außerdem ist eine derartige Nachbehandlung sehr zeit- und damit sehr kostenintensiv.
2) Eine bewährte Form der physikalischen Beeinflussung zur Reduzierung der Schwindrißbildung ist die Auswahl geeigneter Ausgangsstoffe und die Zusammensetzung der hergestellten hydraulisch erhärtenden Baustoffe. Ziel dieser Maßnahmen ist immer die Reduzierung des Anmachwassers und somit die direkte Reduzierung der Austrocknungsgefahr. Zuschlagsart und -form, Kornverteilung, Zuschlaggrößtkorn, Anteil an Abschlämmbarem usw. ermöglichen es z.B., Estrichmörtel mit möglichst kleinem Wasserzementwert bzw. möglichst geringem Zementleimgehalt herzustellen.
   Auch die Mahlfeinheit des verwendeten Bindemittels ist eine physikalische Einflußgröße. Zur Herstellung von Zementestrich können z.B. alle Zemente nach DIN 1164 und bauaufsichtlich zugelassene Zemente verwendet werden, bevorzugt werden allerdings Zemente mit mittlerer Mahlfeinheit, etwa zwischen 2800 cm²/g und 3500 cm²/g. Auch mit der Dauer und Intensität des Mischens oder mit der Verarbeitungstemperatur kann das Längenänderungsverhalten hydraulisch erhärtender Baustoffe beeinflußt werden, siehe "Rendchen K.: Technologie, Herstellung und Anwendung von Zementestrich, TAE-Lehrgangsunterlagen *Estriche im Bauwesen* 1995".
   Eine weitere Einflußmöglichkeit ist die Zugabe physikalisch wirkender Zusatzmittel, wie z.B. Fließmittel, Verflüssiger, Luftporenbildner usw. oder feinen Zusatzstoffen. In der Druckschrift "Rendchen K.: Zusammensetzung und Eigenschaften von zementgebundenem Fließestrich, Beton 39 (1989) H. 3, S. 111 ff", werden ausführlich die Wirkung von Zusatzstoffen, wie z.B. Kalksteinmehl oder Flugasche und verschiedener Fließmittel ausführlich beschrieben und erläutert. Wesentlich ist dabei die Reduzierung des Anmachwassers und damit auch der Schwindneigung; eine schwindarme oder sogar freie Erhärtung kann auf diese Art und Weise allerdings nicht bewirkt werden.
   Da die Rißbildung u.a. auch durch die Behinderung von im Bauteil auftretenden Spannungen verursacht wird, kann sie durch Verbesserung des elastischen Verhaltens des Baustoffes, d.h. durch Reduzierung des Elastizitätsmoduls unterdrückt werden. Praktikabel ist z.B. die Zugabe sogenannter Polymer- oder Kunststoffdispersionen; in der Druckschrift "Alexanderson J.: Self-Smoothing Floors Based on Polymer Cement Concrete, Concrete International, January 1990, S. 49 ff", wird über eine derartige Anwendung berichtet. Aufgrund der notwendigen Zusatzmengen ist diese Möglichkeit der Einflußnahme jedoch sehr teuer.
   In der Druckschrift "Engstrand J.: Shringkage Reducing Admixture for Cementitious Compositions", ConChem-Journal, 5. Jahrgang 5/97, S. 149 ff", wird die Möglichkeit der Schwindungskompensation durch Verwendung leichtflüchtiger Alkohole in Pulverform, z.B. Hexandiole, beschrieben. Dabei wird der effektive Wasser/Bindemittel-Wert reduziert, weil sich der zum Erzielen der Verarbeitungskonsistenz notwendige Wasseranspruch aus dem hydraulischen Anteil und dem leichtflüchtigen Anteil zusammensetzt. Es wird berichtet, daß die durch Austrocknung bedingte Schwindung um ca. 40 % nach 21 Tagen reduziert werden konnte - von 0,8 mm/m auf 0,47 mm/m. Die Wirkung ist allerdings sehr stark abhängig von der verwendeten Zementart; auch diese Variante ist für den praktischen Gebrauch zu teuer.
   In DE-GM 29 503 540.4 wird eine Kombination der genannten Zusatzmittel zur Herstellung eines Fließestriches auf Zementbasis in Form eines selbsttätig verlaufenden selbstnivellierenden Mörtels mit geschlossener Oberfläche beschrieben. Dabei handelt es sich um einen Werktrockenmörtel, d.h. ein Fertigprodukt aus Bindemittel, Zuschlagstoffen und Zusatzmitteln, bei dem bevorzugt als Zement eine Mischung von Portlandzement und Schnellzement vorgesehen ist, damit das zur Verarbeitung notwendige Wasser, - bereits reduziert in der Menge - durch die Zusammensetzung des Flieflestrichgemisches überwiegend chemisch gebunden und ein Schwinden durch Austrocknen reduziert wird. Nachteilig wirken sich die hohen Materialkosten aus, die eine Anwendung im normalen Wohnungsbau als Zementfließestrich schwimmend oder auf Trennlage ausschließen. Untersuchungen der Anmelderin haben zudem gezeigt, daß trotz aller Maßnahmen zur Schwindreduzierung eine Rißbildung in schwimmenden Estrichen, insbesondere bei Estrichdicken > 35 mm, in Verbindung mit Aufschlüsselungen auftritt. Zudem ist durch die Schriellabbindung eine normale Verarbeitung bei entsprechend langer Verarbeitungszeit nicht möglich.
   Es ist Stand der Technik, nicht nur durch Werktrockenmörtel die Gefahr der Schwindrißbildung zu reduzieren, sondern auch durch Herstellen sogenannter Werkfrischmörtel. Nach der Druckschrift DE-GM 29 518 306 kommt ein Gemenge von gewaschenem Sand in der Korngröße 0 bis 8 mm, Zement, Füller, einem Stabilisator und Wasser zum Einsatz, das werksseitig mittels Zwangsmischer gemischt, mit Betonmischfahrzeugen zur Baustelle transportiert und nach der Zugabe hochkonzentrierten Fließmittels anschließend mittels Betonpumpe zum Einbauort gefördert wird. Der Nachteil hierbei ist hauptsächlich ökologischer Art, da der Primärenergieverbrauch infolge des Transports aller Komponenten sehr hoch ist und nicht eingebautes Material wieder zurticktransportiert und entsorgt werden muß.
3) Unter den chemischen Einflußmöglichkeiten wird insbesondere die Beeinflussung der chemischen Reaktionen der verwendeten hydraulisch erhärtenden Bindemitteln mit dem Anmachwasser verstanden. Hierzu zählt die Zugabe besonderer Wirk- und Zusatzstoffe, z.B. Beschleuniger, Verzögerer usw. und ganz besonders die chemische und mineralogische Zusammensetzung des verwendeten Bindemittels. Die Entwicklung besonders schwindarmer oder sogar leichtquellender Bindemittel war daher schon früh von großer Bedeutung für die Praxis.

In der Druckschrift "Keil F.: Zement - Herstellung und Eigenschaften, Springer-Verlag 1971", wird berichtet, daß bereits 1940 mit den bis heute grundsätzlich ähnlichen Mischungen aus üblichem Portlandzementklinker und einem Klinker aus Calcium-Aluminat-Sulfat unter Zusatz von Hochofenschlacke als Moderator oder Stabilisator begonnen wurde. In DE 44 10 850 wird z.B. ein Bindemittel für hydraulisch abbindende Fließestriche oder Industrieböden beschrieben, das aus einer Mischung aus Calciumsulfat, Hüttensand und reaktiven Aluminaten besteht und so neben hohen Frühfestigkeiten und ausreichender Oberflächenfestigkeit ein so geringes Schwindvermögen beim Austrocknen und Endabbinden zeigt, daß kein Reißen oder Aufschlüsseln erfolgt.

Nachteilig bei der Verwendung der genannten Komponenten ist, daß sie relativ teuer sind und nicht überall zur Verfügung stehen.

Insbesondere zur Herstellung rissefreier Zementfließestriche ist es Stand der Technik, reaktive CaSO₄-Verbindungen und Zement so miteinander zu mischen, daß eine größtmögliche Ettringitbildung stattfindet, wodurch der Zementfließestrich schnell, risse- und schwindungsfrei aushärtet. Hierüber wird z.B. in DE 44 10 130 berichtet. Nachteilig bei dieser Erfindung ist, daß das Produkt fertig mit Kalksteingries-Zuschlägen gemischt wird und somit nicht auf regional geeignete Sande zurückgegriffen werden kann. Außerdem kann als Zement nur Portlandzement, Eisenportlandzement oder Hochofenzement eingesetzt werden, nicht jedoch z.B. Portlandölschieferzement.

In EP 427 064 wird ebenfalls ein hydraulisches Bindemittel und seine vielfältigen Verwendungsmöglichkeiten beschrieben. Auch dabei werden α-Calciumsulfat-Halbhydrat und Zement sowie weitere Zusätze miteinander gemischt, wobei der Zement dadurch gekennzeichnet ist, daß ein aluminatarmer Portlandzement HS nach DIN 1164, C₃A < 3 % verwendet wird. Eine Verwendung von normalem Zement, also nicht hochsulfatbeständig, mit höherem C₃A-Gehalt ist nicht vorgesehen.

Darüber hinaus ist es Stand der Technik, die Schwindneigung durch sogenannte Expansions- oder Quellzemente zu reduzieren. In DE 195 01 074 wird ein derartiges Bindemittel beschrieben, das Portlandzement, Tonerdezement, Gips und insbesondere Zitronensäure oder Weinsäure oder deren Salze enthält. Ein derartiges Bindemittel ist für die Verfüllung von Hohlräumen, vorzugsweise bei der Herstellung von Bodenankern oder Felsankern vorgesehen. Allerdings beträgt die Volumenexpansion 10 bis 20 %, bei stabiler Wasserlagerung und Verarbeitungszeiten von 20 bis 40 Minuten. Die niedrige Verarbeitungszeit und die hohe Volumenexpansion machen daher eine Anwendung in Baustoffen wie Estrichen, Vergußbetonen, Sruckmörteln usw. unmöglich.

In der Druckschrift "Kikas u.a.: Portland-Ölschieferzement als Quellzement, Wiss. Zeitschrift der Bauhaus-Universität Weimar 42 (1996), 4/5, S. 165 ff", wird die Einstellung einer Quellung bis 40 mm/m, insbesondere zur Herstellung spezieller Quell- und Spannzemente, beschrieben. Allerdings handelt es sich dabei um den sogenannten Kukersit-Ölschiefer, der bei Temperaturen von 1300 bis 1400°C in Staubfeuerungen verbrannt wird und dadurch einen Freikalk-Gehalt bis 14 % und einen Calciumsulfat-Gehalt bis 15 % besitzt. Die erreichbaren Druckfestigkeiten und die beobachteten Quellmaße können zur Herstellung schwindarmer Bindemittel auf der Basis von Ölschiefer nicht herangezogen werden.

Es ist daher die Aufgabe der vorliegenden Erfindung, eine Bindemittelmischung und Möglichkeiten der Verwendung derselben zu schaffen, mit der ein schwindarmes oder schwindkompensiertes Bindemittel hergestellt werden kann, das einen reduzierten Wasseranspruch bei gleichzeitig gutem rheologischem Verhalten, Feuchtebeständigkeit, Rißsicherheit und Temperaturunabhängigkeit gewährleistet und eine leichte zuverlässige und wirtschaftliche Herstellung von Baustoffen daraus, unter Verwendung lokaler, geeigneter Sande verschiedenster Kornverteilungen und Korngrößen zuläßt und damit ökologisch weitere Vorteile schafft.

Diese Aufgabe wird durch die in Anspruch 1 gekennzeichnete Bindemittelmischung gelöst. Vorteilhafte Weiterbildungen der Mischung und Verwendungsmöglichkeiten werden in den Unteransprüchen gekennzeichnet.

Erfindungsgemäß gelingt die Herstellung von schwindarmen Bindemitteln mit Bindemittelmischungen, die gebrannten Ölschiefer, Zementklinker, Calciumsulfat, Siliciumdioxid, Alkalisulfat und Fließmittel enthalten. Weitere zweckmäßige Zusätze sind Entschäumer, Verzögerer und Kunststoffdispersionen.

Vorteilhaft sind folgende Trockenmischungen:
― 10 bis 20 Gew.-%, insbesondere 12 bis 16 Gew.-% gebrannter Ölschiefer nach DIN 1164, Teil 1, Abschnitt 4.5 und ENV 197,
― 20 bis 50 Gew.-%, insbesondere 30 bis 45 Gew.-% Portlandzement-Klinker,
― 15 bis 30 Gew.-%, insbesondere 20 bis 25 Gew.-% Steinkohle-Flugasche,
― 15 bis 30 Gew.-%, insbesondere 20 bis 25 Gew.-% Anhydrit,
― 0 bis 3 Gew.-%, insbesondere 2 bis 2,5 Gew.-% Fließmittel,
― 0 bis 2 Gew.-% insbesondere 0,4 bis 0,8 Gew.-% Alkalisulfat,
― 0 bis 1 Gew.-%, insbesondere 0,2 bis 0,4 Gew.-% Entschäumer,
― 0 bis 1 Gew.-%, insbesondere 0,3 bis 0,6 Gew.-% Verzögerer,
― 0 bis 3 Gew.-%, insbesondere 1 bis 2 Gew.-% Kunststoffdispersionen.

Bei dem verwendeten Ölschiefer handelt es sich um bitumenarmen Posidonienschiefer mit einem durchschnittlichen Gehalt an organischer Substanz von 10 bis 13 %.

Der Ölschiefer wird nach entsprechender Aufbereitung im Wirbelschichtofen bei ca. 810°C gebrannt und anschließend sehr fein vermahlen. Vorzugsweise wird der gebrannte Ölschiefer auf eine Mahlfeinheit gemäß DIN EN 196-6 nach dem Luftdurchlässigkeitsverfahren (Blaine) von 6.000 bis 10.000 cm²/g gebracht.

Die chemische Zusammensetzung des gebrannten Ölschiefers ist abhängig von der Geologie der Lagerstätte und dem Brennprozeß. Die Durchschnittsanalyse weist etwa 32 % CaO, 36 % SIO₂, 11 % Al₂O₃, 10 % SO₃, 7 % Fe₂O₃ und geringe Mengen von MgO, K₂O und Na₂O auf (Werte glühverlustbehaftet). Die mineralogische Zusammensetzung ist u. a. beschrieben in "Rohrbach R.: Herstellung von Ölschieferzement und Gewinnung elektrischer Energie aus Ölschiefer nach dem Rohrbach-Lurgi-Verfahren; ZKG 7 (1989, Heft 7, S. 293 ff)". Bei der Reaktion im Wirbelbett im festen Zustand entstehen Calciumsilikate (vornehmlich C₂S), verschiedene Calciumaluminate und Calciumsulfat. Neben ca. 4 bis 5 % Freikalk enthält der gebrannte Ölschiefer noch größere Mengen an reaktiver Kieselsäure.

Der gebrannte Ölschiefer ist selbst hydraulisch erhärtend und kann teilweise durch latent-hydraulische Stoffe ersetzt werden. Ebenso ist es möglich, einen Teil des gebrannten Ölschiefers durch Gesteinsmehle, insbesondere aus Kalkstein oder Kalkmergel, zu ersetzen, sofern dadurch nicht die erwähnten wichtigen Anforderungen an hydraulische Bindemittel mit reduzierter Schwindung beeinträchtigt werden.

Der verwendete Portlandzement-Klinker besitzt eine praxisübliche Klinkerphasen-Zusammensetzung gemäß "VDZ-Zement-Taschenbuch 1984 (Bauverlag)" und ist durch eine wesentlich geringere Mahlfeinheit gekennzeichnet. Vorzugsweise wird er auf eine Mahlfeinheit von 2.700 bis 4.500 cm²/g nach Blaine gemahlen.

Gebrannter Ölschiefer und Portlandzement-Klinker werden erfindungsgemäß gemeinsam oder getrennt vermahlen. Bei getrennter Vermahlung werden beide Komponenten in einer geeigneten Bindemittelmischanlage trocken homogen vermischt.

Bei der Steinkohlen-Flugasche handelt es sich um Flugasche für Beton gemäß EN 450. Steinkohlen-Flugaschen mit Prüfzeichen werden bereits seit längerem als Betonzusatzstoff oder als Bestandteil von flugaschehaltigen Zementen eingesetzt. Sie verbessern die Betoneigenschaften durch physikalische und puzzolanische Wirkung. Der mittlere Korndurchmesser der glasigen, überwiegend kugelförmigen Partikel sollte vorzugsweise zwischen 1 bis 100, vorzugsweise 5 bis 20 µm liegen.

Als Anihydrit kann Natur-Anhydrit, synthetischer Anhydrit oder REA-Anhydrit eingesetzt werden. Damit die eingangs geforderten Eigenschaften eines hydraulischen Bindemittels mit reduzierter Schwindneigung erreicht werden, werden an die Gleichmäßigkeit und die Reinheit des verwendeten Anhydrits große Anforderungen gestellt. Daher wird vorzugsweise sehr homogener, reiner REA-Anhydrit mit Reinheiten > 85 % eingesetzt.

Das verwendete Alkalisulfat dient als Beeinflussungskomponente für den Reaktionsablauf. Alkalisulfate sind bekannt und dienen z. B. als Anreger in konventionellen Calciumsulfat-Fließestrichen. Eine gezielte Verwendung in hydraulisch gebundenen Baustoffen ist bisher jedoch nicht bekannt.

Als verflüssigende Komponente zur Reduzierung des Wasseranspruchs des Bindemittels haben sich Betonverflüssiger oder Fließmittel auf der Basis von Ligninsulfonat, eines Melamin-, Naphthalin-, Acrylsäure- oder Maleinsäure-Copolymers bewährt. Vorzugsweise wird ein Melamin-Polykondensat auf Natriumsulfonatbasis eingesetzt.

Zur Einstellung der elastischen Eigenschaften des erhärtenden Festmörtels wird ein redispergierbares Kunststoffdispersionspulver verwendet. Bewährt haben sich Acrylat-Dispersionen und Homo- bzw. Copolymerisate auf Vinylacetat- oder Styrol-Basis oder sogenannte Druckpolymerisat-Dispersionen. Vorzugsweise wird ein redispergierbares Dispersionspulver eines Vinylacetat-Ethylen-Copolymers mit guter Verseifungsresistenz eingesetzt.

Als Entschäumer werden Polyglykole oder Kombinationen von flüssigen Kohlenwasserstoffen, Polyglykol und amorpher Kieselsäure eingesetzt. Bevorzugt werden Polyethylenglykole in Pulverform verwendet.

Als Verzögerer werden anorganische Verbindungen, bevorzugt komplexe Phosphate oder Alkalipyrophosphate, eingesetzt.

Angesichts der erfindungsgemäßen Wahl der Feststoffkomponenten und deren Mengen bzw. der Zusammensetzung der Trockenmischung gelingt es überraschenderweise, ein Bindemittel mit reduzierter Schwindung und daraus entsprechende Baustoffe herzustellen, die alle eingangs geforderten Eigenschaften wie reduzierter Wasseranspruch, reduzierte Porosität, Anwendung lokaler geeigneter Sande, ökologische Vorteile usw. erfüllen.

Erfindungswesentlich ist die entsprechend der eingangs genannten Zusammensetzung des gebrannten Ölschiefers eingestellte Erhöhung des SO₄-Anteils und des SiO₂-Anteils in Form der genannten Zusatzstoffe sowie die Einstellung und Regelung der Alkalisulfatmenge. Dadurch wird die exakte Einstellung des Reaktionsablaufs einer Ettringitbildung und eines entsprechenden Abbaus in der Lösungsphase und in der erstarrenden/erhärtenden Phase ermöglicht.

Die bisher bekannten Schadensbilder in der festen Phase - Ettringitzerfall durch Feuchte- und Temperaturschwankungen und damit verbundenen Festigkeitsverluste, Volumenverminderung und Schwindung oder Ettringitbildung und damit Treiberscheinung - werden somit erfindungsgemäß vermieden.

Der zugegebene Verzögerer reguliert die Abbindung und das Erstarren des eingesetzten Portlandzementklinkers, insbesondere die typischen Reaktionen der Aluminat- und Silikarphasen, damit die daraus entstehenden festigkeitsbildenden CSH-Phasen die oben beschriebenen Reaktionen nicht stören.

Zweckmäßig kann das erfindungsgemäße Bindemittel zusätzlich geeignete Fasern, wie z. B. Polypropylen-, Glas- oder Polyacrylnitril-Fasern enthalten. Versuche haben gezeigt, daß durch Faserzugabe, insbesondere von alkalibeständigen Fasern die Neigung zur Rißbildung von Baustoffen, hergestellt mit dem schwindarmen Bindemittel, weiter reduziert werden kann.

Bei der Verwendung des erfindungsgemäßen Bindemittels zur Herstellung schwindungsoptimierter Zement-Estriche ist es zur Verbesserung der Schwindreduzierung zweckmäßig, die Estriche auf Trockenschüttungen als Unterbau zu applizieren. Dabei handelt es sich um Schüttungen aus Blähton bzw. Blähglas, die zum Teil mit Zement stabilisiert wurden. Bei Messungen der Anmelderin wurden je nach Ausgangskonsistenz somit Reduzierungen des effektiven W/Z-Wertes von bis zu 20% (gemessen nach 6 h) festgestellt.

In den nachfolgenden Beispielen sind erfindungsgemäße Bindemittelformulierungen und einige Verwendungen näher erläutert:

### Beispiel 1

### Bindemittelformulierungen

| Komponente | Beispiel 1a | Beispiel 1b |
|---|---|---|
| CEM II/B-T 42,5 R (Portlandzementklinker und gebrannter Ölschiefer gemeinsam vermahlen) | 51,8 | 50,6 |
| Steinkohlen-Flugasche | 22,6 | 22,1 |
| hochreiner REA-Anhydrit | 22,6 | 22,1 |
| Fließmittel/sulfoniertes Melamin-Kondensat | 2,3 | 2,2 |
| Natriumsulfat | 0,7 | 0,6 |
| Redispergierbares Kunststoffdispersionspulver | - | 1,8 |
| Verzögerer | - | 0,4 |
| Entschäumer | - | 0,2 |
| Anforderungen an Schwind- und Rißreduzierung | normal | erhöht |

Die Komponenten werden homogen miteinander vermischt. Diese Gemische wurden in verschiedenen Anwendungen als Bindemittel verwendet und die eingangs beschriebenen Vorteile untersucht. Die Messungen wurden an sogenannten Schwindrinnen (Länge 1m) und überwiegend bei Lagerung in Klima gemäß DIN 18557 (20°C/65% r.F.) vorgenommen.

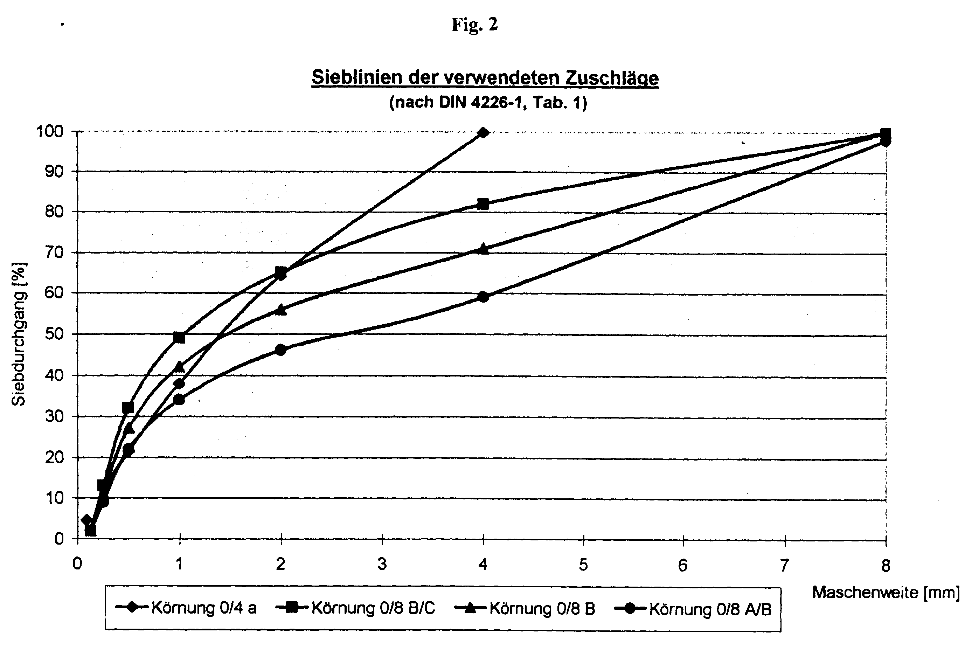

Fig. 2 zeigt die unterschiedlichen Sieblinien der in den Anwendungen verwendeten Kalkstein-Zuschläge.

Mit jeweils 57,65 Gew.-% der Körnung 0/8 B/C und 42,35 Gew.-% des Bindemittels nach Beispiel 1a bzw. 1b wurden Feinbetone hergestellt, um den Einfluß der Bindemittel-Zusammensetzung zu untersuchen.

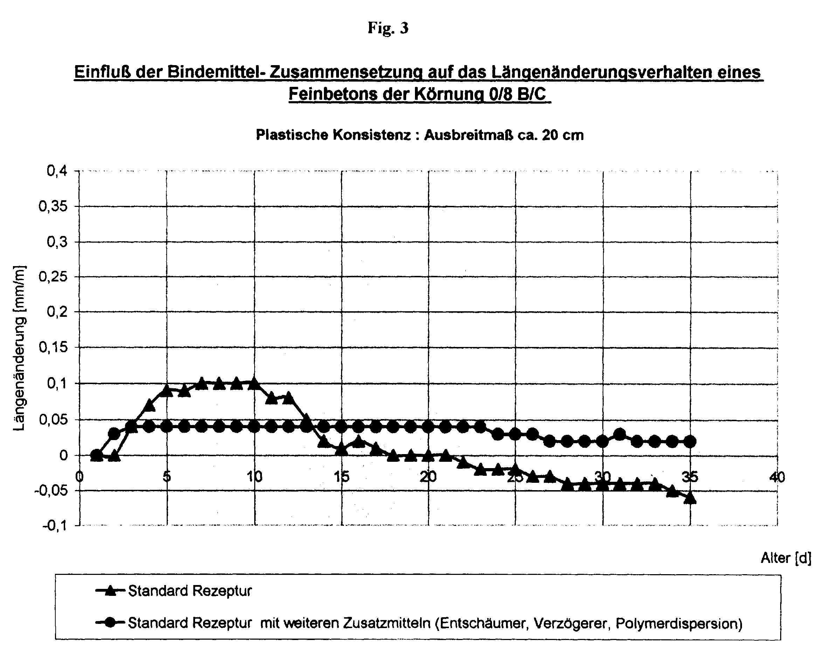

Fig. 3 zeigt die gemessenen Längenänderungen bei unterschiedlicher Bindemittel-Zusammensetzung. Mit der Standardrezeptur nach Beispiel 1a kann man schon eine gute Schwindreduzierung erreichen. Für erhöhte Anforderungen können die weiteren Zusatzmittel zur Herstellung des Bindemittels nach Beispiel 1b verwendet werden.

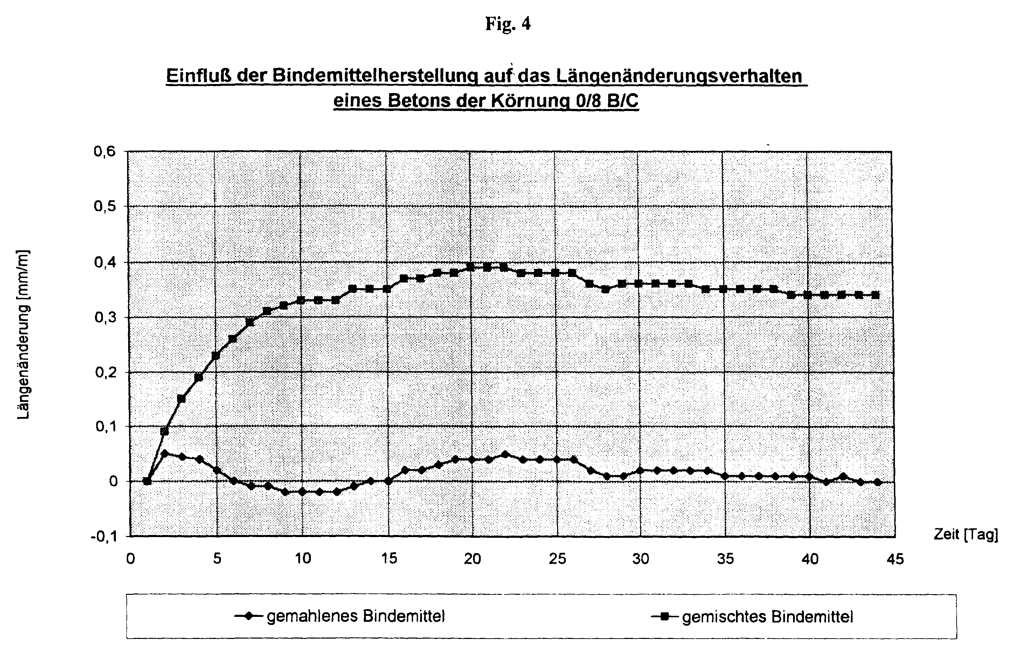

Fig. 4 zeigt den Einfluß der Bindemittelherstellung auf das Längenänderungsverhalten, insbesondere die Verwendung eines gemahlenen Bindemittels im Vergleich zu einem gemischten Bindemittel, gemessen am Feinbeton nach oben beschriebener Mischung mit Bindemittel nach Beispiel 1a. Man erkennt, daß beide Herstellungsverfahren möglich sind, die Herstellung des schwindarmen Bindemittels per Mischung jedoch offensichtlich eine bessere Schwindkompensation sogar bis in den Bereich einer leichten Quellung (ähnlich wie bei Calciumsulfatestrichen) bewirkt.

### Beispiel 2

### Vergußbeton

Vergußbetone eignen sich zur Verfüllung von bestimmten Mauerwerksbildnern, z.B. Schallschutzziegeln, geeigneten Hohlbocksteinen mit außenseitig aufgebrachter Wärmedämmung, usw.. Insbesondere bei Steinen mit durchgängigen Stegen besteht bei herkömmlichen Vergußbetonen Gefahr der Schwindung und Rißbildung.

Als erfindungsgemäßer Vorteil wurde die Anwendung verschiedener Kornverteilungen bei verschiedenen Verarbeitungskonsistenzen genannt. Diese beiden Einflußfaktoren wurden untersucht. Dazu wurden 57,65 Gew.-% Zuschläge der jeweiligen Kornverteilung und 42,35 Gew.-% Bindemittel nach Beispiel 1b zu einem verarbeitbaren plastischen Feinbeton in einem Freifallmischer gemischt.

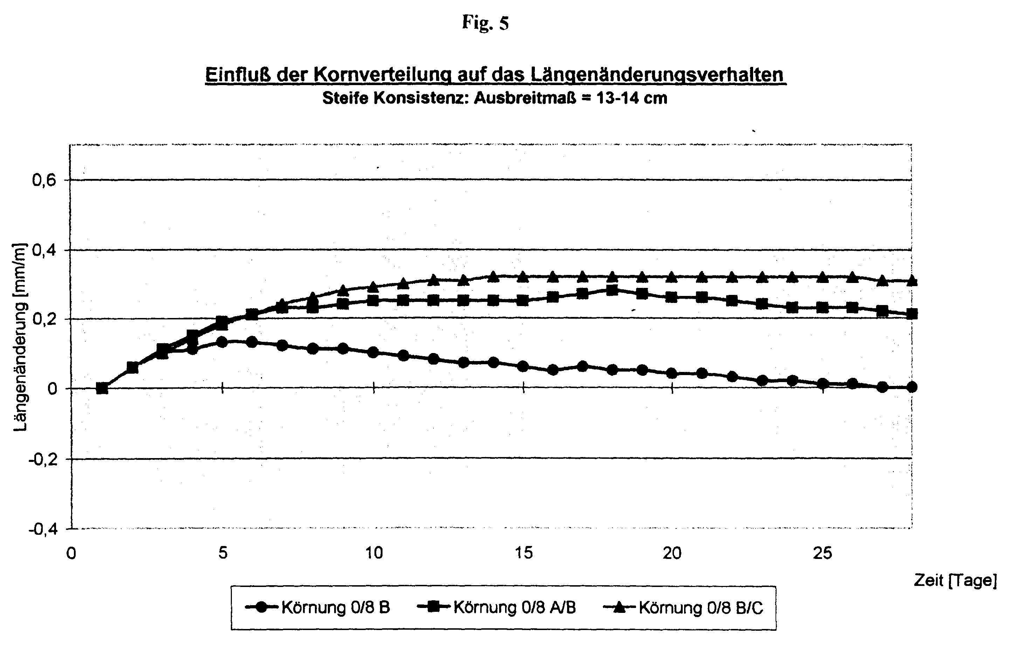

Fig. 5 zeigt den Einfluß der Kornverteilung auf das Längenänderungsverhalten bei steifer Verarbeitungskonsistenz.

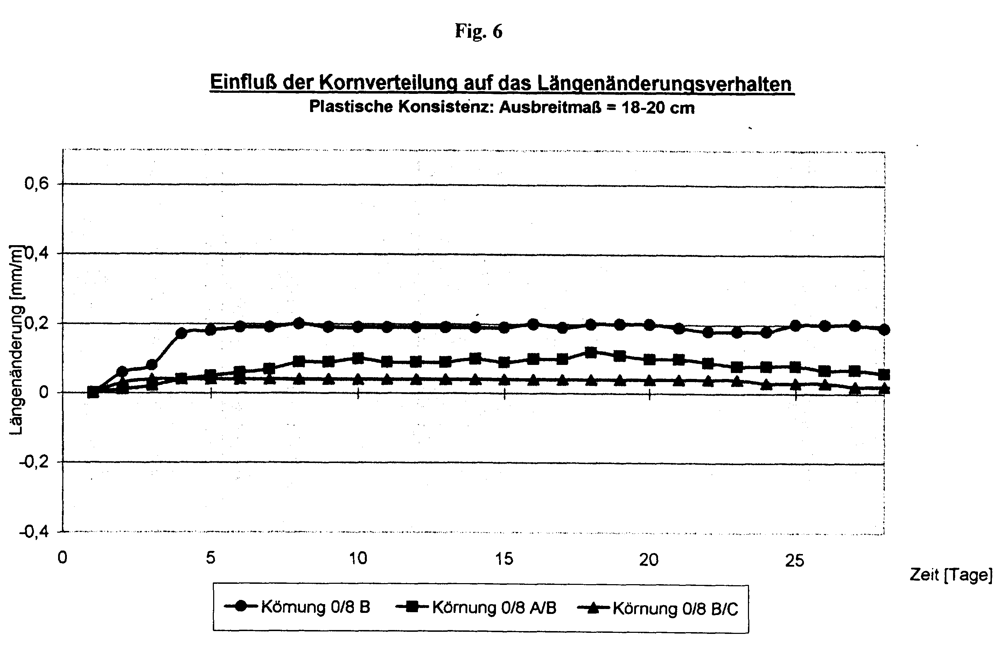

Fig. 6 zeigt den Einfluß der Kornverteilung auf das Längenänderungsverhalten bei plastischer Konsistenz.

Sowohl bei stark schwankender Kornverteilung als auch bei stark unterschiedlichen Konsistenzen werden in allen Fällen leichte Quellmaße erreicht und damit eine Schwindung der Baustoffe vermieden.

### Beispiel 3

### Fließfähiger Zementestrich

Ein erfindungsgemäßer Vorteil ist die Verwendung geeigneter lokaler Sande, wie es z.B. in einem Transportbetonwerk möglich ist. Dort können unterschiedliche Körnungen zum Einsatz kommen. Dieser Einflußfaktor wurde untersucht. Dazu wurden im Mittel 55 Gew.-% des jeweiligen Zuschlags mit 45 Gew.-% Bindemittel nach Beispiel 1b zu einem homogenen Feinbeton bzw. Mörtel mit nahezu gleichem Wasseranspruch gemischt und verarbeitet.

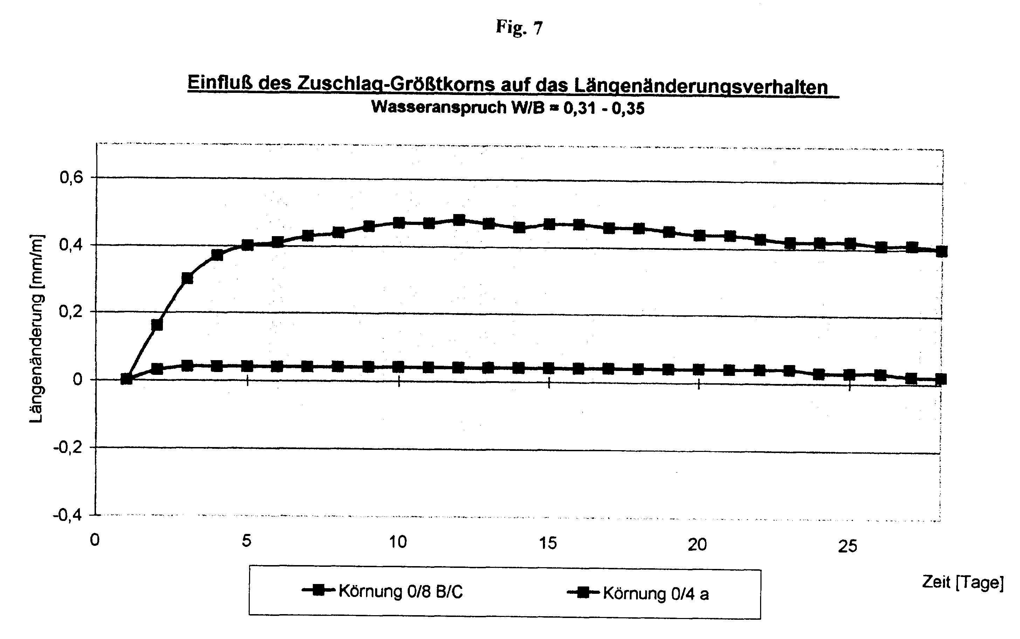

Fig. 7 zeigt den Einfluß des Zuschlag-Größtkorns auf das Längenänderungsverhalten dieser Mörtel. Es zeigt sich deutlich die Einstellung einer leichten Quellung unabhängig vom verwendeten Größtkorn; eine Schwindung des Baustoffes wird nicht beobachtet.

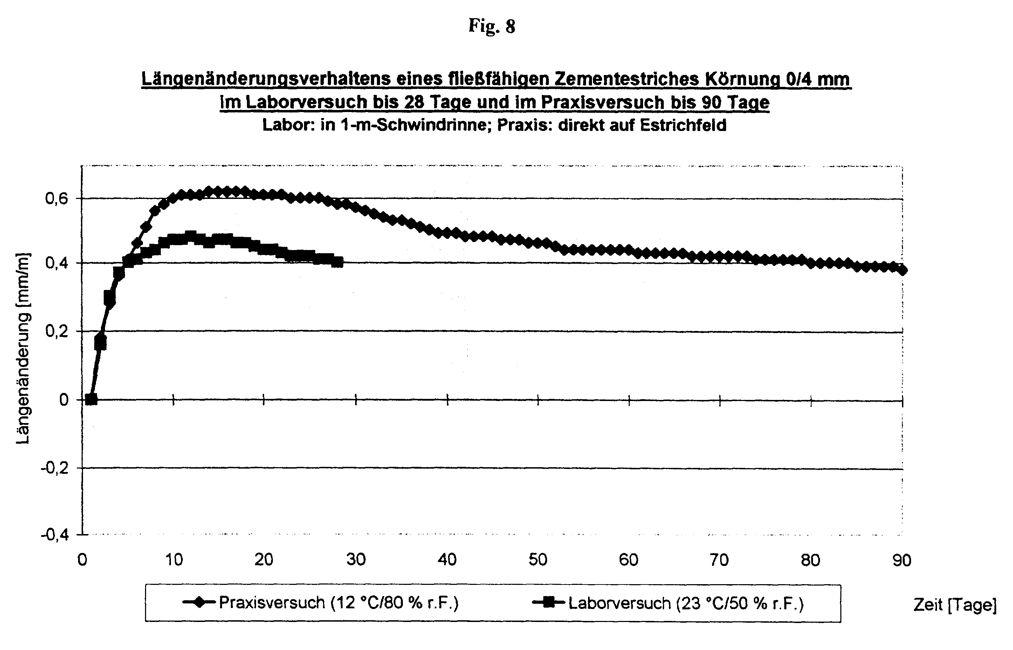

Ein weiterer erfindungsgemäßer Vorteil ist die Verwendung bei verschiedenen Klimata. Dazu wurde das Längenänderungsverhalten eines fließfähigen Zementestriches der Körnung 0/4 mm, hergestellt aus 54,65 Gew.-% Zuschlag und 45,35 Gew.-% Bindemittel nach Beispiel 1b, im Labor bei 23°C - 50 % r.F. sowie in der Praxis bei einem konstanten Klima von 12°C - 80 % r.F., untersucht. Dabei zeigt sich gemäß Fig. 8 keine klimaabhängige Verschlechterung des Längenänderungsverhaltens, so daß das erfindungsgemäße Bindemittel auch bei unterschiedlichen Klimata mit reduzierter Schwindung einwandfrei funktioniert.

### Beispiel 4

### Hochwärmedämmende Baustoffe

An Leichtmauermörtel LM21 nach DIN 1053, aber auch an Wärmedämmputze, Außenstuckmörtel usw., also Baustoffe, die in solchen Dicken aufgetragen werden, daß eine freie Schwindung in der Praxis möglich ist, werden hohe Anforderungen an reduzierte Schwindeigenschaften gestellt. Aus diesem Grund wurden zwei Mörtel hergestellt, aus jeweils 57,65 Gew.-% Zuschlag (Blähglasgranulat bzw. gebrochener Kalksteinsand) und 42,35 Gew.-% Bindemittel nach Beispiel 1b und zu homogenen Mörteln vermischt. Aufgrund des wesentlich höheren W/B-Wertes bei dem hochwärmedämmenden Baustoff stellt sich eine leichte Schwindung ein. Im Vergleich zu üblichen hochwärmedämmenden Baustoffen, bei denen Normalzement nach DIN 1164 verwendet werden, ist dieses Schwindmaß allerdings sehr gering.

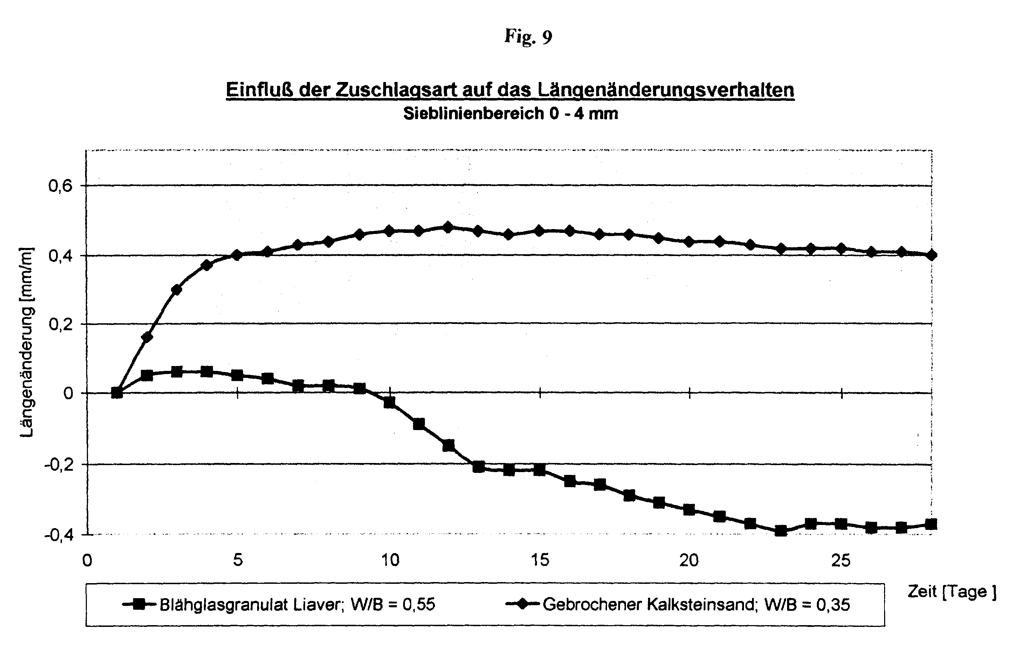

Fig. 9 zeigt den Einfluß der Zuschlagsart auf das Längenänderungsverhalten der beschriebenen Mörtel.

### Beispiel 5

### Leichtmauermörtel LM21 nach DIN 1053

Leichtmauermörtel, hergestellt mit Zementen nach DIN 1164, besitzen aufgrund der oftmals stark saugenden Leichtzuschläge und des zur Erreichung einer geeigneten Verarbeitungskonsistenz notwendigen hohen Wasseranspruchs auch ein entsprechend hohes Schwindmaß. Dies kann in vielen Fällen zur Rißbildung in der auf dem Leichtmauerwerk aufgebrachten Putzschale führen. Die Verwendung des erfindungsgemäßen Bindemittels für diese Anwendung bringt daher erhebliche technische und volkswirtschaftliche Vorteile.

Aus diesem Grund wurde bei einem konventionellen Leichtmauermörtel LM21 nach DIN 1053 das verwendete Bindemittel (CEM II/B-T 42,5 R) gegen das Bindemittel nach Beispiel 1a im gleichen Massenverhältnis ausgetauscht.

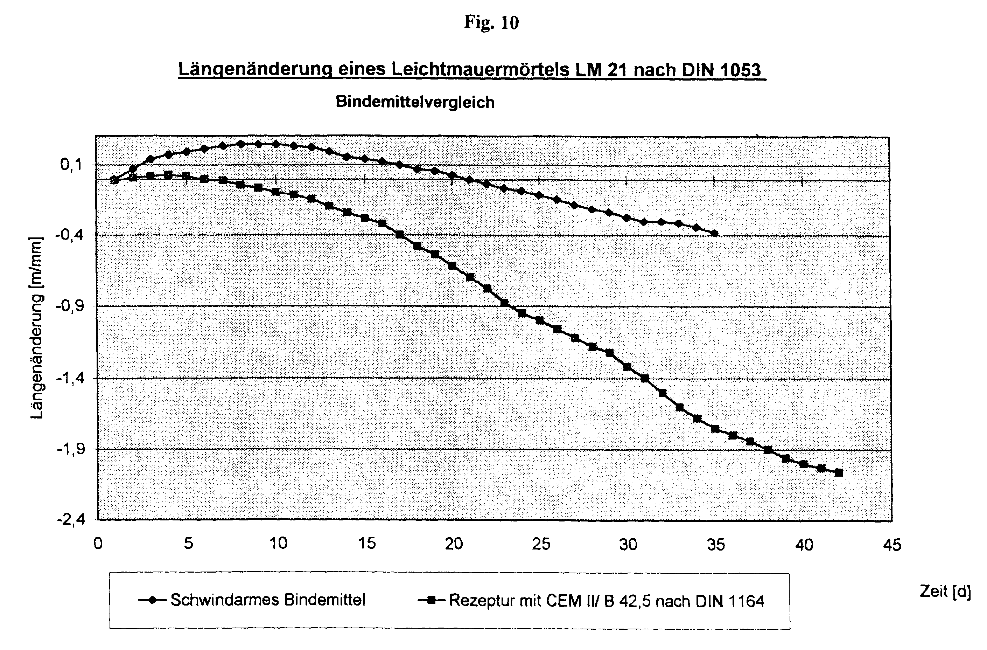

Fig. 10 zeigt die gemessenen Längenänderungen an den Mörteln. Bei Verwendung des erfindungsgemäßen Bindemittels kann das Schwindmaß um über 75% reduziert werden.

## Patentansprüche

1. Bindemittel für zementgebundene Massen, welches enthält:
― gebrannten Ölschiefer
― Zementklinker
― Calciumsulfat
― Siliciumdioxid
― Alkalisulfat
― Fließmittel.

2. Bindemittel nach Anspruch 1, welches zusätzlich enthält:
― Entschäumer
― Verzögerer
― Polymerdispersion

3. Bindemittel nach Anspruch 2, welches enthält:
― 10 bis 20 Gew.-%, insbesondere 12 bis 16 Gew.-% gebrannter Ölschiefer nach DIN 1164, Teil 1, Abschnitt 4.5 und ENV 197,
― 20 bis 50 Gew.-%, insbesondere 30 bis 45 Gew.-% Portlandzement-Klinker,
― 15 bis 30 Gew.-%, insbesondere 20 bis 25 Gew.-% Flugasche,
― 15 bis 30 Gew.-%, insbesondere 20 bis 25 Gew.-% Anhydrit,
― 0 bis 3 Gew.-%, insbesondere 2 bis 2,5 Gew.-% Fließmittel,
― 0 bis 2 Gew.-% Alkalisulfat, insbesondere 0,4 bis 0,8 Gew.-% Natriumsulfat,
― 0 bis 1 Gew.-%, insbesondere 0,2 bis 0,4 Gew.-% Entschäumer,
― 0 bis 1 Gew.-%, insbesondere 0,3 bis 0,6 Gew.-% Verzögerer,
― 0 bis 3 Gew.-%, insbesondere 1 bis 2 Gew.-% Kunststoffdispersionen.

4. Bindemittel nach Anspruch 3, bei dem die Flugasche Steinkohlen-Flugasche für Beton gemäß EN 450 ist und bei der der mittlere Korndurchmesser der glasigen, überwiegend kugelförmigen Partikel zwischen 5 und 20 µm liegt.

5. Bindemittel nach einem der vorhergehenden Ansprüche, welches zusätzlich Fasern, insbesondere alkalibeständige Fasern wie Polypropylen-, Glas- oder Polyacrylnitril-Fasern enthält.

6. Baukörperteil mit einem Zement-Estrich, der ein Bindemittel gemäß einem der vorhergehenden Ansprüche enthält und einen Unterbau überdeckt, wobei der Unterbau Blähton oder Blähglas, gegebenenfalls jeweils zumindest teilweise mit Zement stabilisiert, umfaßt.
